# EUROPÄISCHE PATENTSCHRIFT

(11) **EP 3 872 259 B1**
(45) Veröffentlichungstag und Bekanntmachung des Hinweises auf die Patenterteilung: **06.04.2022**
(21) Anmeldenummer: 20159708.5
(22) Anmeldetag: 27.02.2020
(51) Int. Cl.: E01C 19/48, G09F 19/18, G09F 21/04, G03B 21/00

(54) **STRASSENFERTIGER MIT EINEM PROJEKTOR**
ROAD FINISHER WITH PROJECTOR
FINISSEUR DOTÉ D'UN PROJECTEUR

(43) Veröffentlichungstag der Anmeldung: 01.09.2021
(62) Teilanmeldung aus: 20200723.3
(73) Patentinhaber: Joseph Vögele AG, 67067 Ludwigshafen (DE)
(72) Erfinder: ERDTMANN, Bernhard, 68535 Edingen Neckarhausen (DE)
(74) Vertreter: Grünecker Patent- und Rechtsanwälte PartG mbB

(56) Entgegenhaltungen:
- EP-A1- 3 543 402
- WO-A1-2017/121717
- WO-A2-2004/108348
- JP-A- 2014 211 086

## Beschreibung

Die Erfindung bezieht sich auf einen Straßenfertiger gemäß dem Oberbegriff des Anspruchs 1. Ferner betrifft die Erfindung ein Verfahren gemäß dem Anspruch 13.

Gattungsgemäße Straßenfertiger werden in der Praxis zur Herstellung neuer Straßenbelagsschichten eingesetzt. Bekannte Straßenfertiger weisen eine Einbaubohle mit seitlichen Außenbedienständen für einen Bohlenbediener auf, woran sich verschiedene Prozessparameter einstellen und überprüfen lassen. Am Außenbedienstand kann der Bohlenbediener beispielsweise die Einbaubreite, die Einbaudicke, verschiedene Verdichtungsaggregate und/oder Heizelemente der Einbaubohle einstellen, um eine gewünschte neue Straßenbelagsschicht herzustellen. Die vom Bohlenbediener eingestellten Prozessparameter können anhand eines Displays am Außenbedienstand der Einbaubohle angezeigt werden. Ferner lassen sich am Display die tatsächlich hergestellten Prozessparameter visualisieren. Der seitlich, in unmittelbarer Nähe am Außenbedienstand während des Einbaubetriebs des Straßenfertigers mitlaufende Bohlenbediener kann damit das Einbauergebnis gut steuern und überwachen.

EP 3 402 928 B1 offenbart einen Straßenfertiger mit einem Projektor, der dazu ausgebildet ist, Navigationsleitlinien auf den vom Straßenfertiger befahrenen Untergrund zu projizieren.

EP 3 124 698 B1 offenbart einen Straßenfertiger mit einem Projektor, der dazu ausgebildet ist, einem dem Straßenfertiger hinterherfahrenden Verdichterfahrzeug Walzhinweise auf die neu hergestellte Einbauschicht zu projizieren.

EP 3 543 402 A1 offenbart einen Straßenfertiger mit einer Anzeigeeinrichtung, die dazu ausgebildet ist, zumindest einen Teil des Straßenfertigers zusammen mit dazugehörigen, am Straßenfertiger gemessenen Betriebsparametern zu visualisieren.

JP 2014 201 086 A offenbart einen Straßenfertiger mit einer Bedieneinrichtung, die ein Head-Up-Display aufweist.

WO 2017/121717 A1 offenbart einen Straßenfertiger mit einem Projektor, der dazu ausgebildet ist, sichtbare Projizierungen, bspw. Laser-Leitlinien auf einem Untergrund, auf dem sich der Straßenfertiger fortbewegt, darzustellen. Die sichtbaren Projizierungen auf dem Untergrund können einem LKW-Fahrer bei einem Materialübergabeprozess das Heranfahren des LKWs an den Gutbunker des Straßenfertigers erleichtern.

WO 2004/108348 A3 offenbart eine Werkzeugmaschine mit einer daran angebrachten Platte, die als Projektionsfläche von einem Bediener nutzbar ist, wobei sich auf der Platte Betriebsparameter mittels eines Projektors darstellen lassen.

Die Aufgabe der vorliegenden Erfindung besteht darin, einen Straßenfertiger sowie ein Verfahren zur Verfügung zu stellen, wodurch eine Betriebskontrolle der am Straßenfertiger befestigten Einbaubohle sowie eine Qualitätskontrolle der damit hergestellten Einbauschicht noch besser möglich sind.

Diese Aufgabe wird gelöst durch einen Straßenfertiger mit den Merkmalen des Anspruchs 1. Ferner wird diese Aufgabe gelöst durch ein Verfahren mit den Merkmalen des Anspruchs 13. Vorteilhafte Weiterbildungen der Erfindung sind in den abhängigen Ansprüchen angegeben.

Der erfindungsgemäße Straßenfertiger ist zum Herstellen einer Einbauschicht, beispielsweise einer bituminösen Asphaltschicht, ausgebildet. Der Straßenfertiger umfasst ein Chassis sowie eine höhenverstellbar gelagerte Einbaubohle zum Verdichten eines Einbaumaterials. Die Einbaubohle weist mindestens einen Außenbedienstand für einen Bohlenbediener auf. Der Außenbedienstand hat eine Steuereinrichtung, die mindestens ein Bedienpanel zum Einstellen von Prozessparametern an der Einbaubohle und/oder mindestens ein Display zur Anzeige von an der Einbaubohle eingestellten Prozessparametern umfasst.

Der erfindungsgemäße Straßenfertiger kennzeichnet sich durch mindestens einen Projektor, der dazu ausgebildet, mindestens einen der am Bedienpanel eingestellten und/oder am Display angezeigten Prozessparameter auf mindestens eine Projektionsfläche zu projizieren, sodass der projizierte Prozessparameter insbesondere für einen Bohlenbediener der Einbaubohle sichtbar ist.

Ein am Außenbedienstand eingestellter und/oder ein daran angezeigter Prozessparameter wird damit zusätzlich mittels Projizierung auf einer oder mehreren Projektionsflächen sichtbar gemacht. Damit wird erreicht, dass der am Außenbedienstand am Bedienpanel eingestellte und/oder am Display angezeigte Prozessparameter der Einbaubohle auch dann vom Bohlenbediener kontrolliert werden kann, wenn dieser sich nicht mehr unmittelbar am Außenbedienstand aufhält. Damit lässt sich der Einbauprozess vom Bohlenbediener noch besser überwachen, wobei der projizierte Prozessparameter ebenfalls für weiteres Baustellenpersonal sichtbar ist, beispielsweise für einen Fahrer des Straßenfertigers sowie für einen Vorgesetzten der Einbaumannschaft. Dies ermöglicht für die Qualitätssicherung automatisch ein Mehraugenprinzip.

Der Prozessparameter kann in Form eines Zahlenwerts, einer Buchstabenfolge und/oder eines Symbols im optisch sichtbaren Bereich auf die Projektionsfläche projiziert sein. Wahlweise kann der projizierte Zahlenwert durch ein SI-Einheitenzeichen, beispielsweise eine Längenangabe, eine Frequenzeinheit und/oder eine Temperatureinheit, ergänzt sein.

Vorstellbar ist es, dass der eingestellte und/oder erfasste Prozessparameter für den Fall, dass er nicht sollwertig ist, intermittierend auf die Projektionsfläche projizierbar ist, um als Warnsignal besser auf einen Fehlzustand hinzuweisen. Eine Variante sieht vor, dass der projizierte Prozessparameter seine Farbe ändern kann, um in verschiedenen Farben einen sollwertigen oder nichtsollwertigen Einbauwert anzuzeigen. Eine Farbanpassung der Projizierung kann auch in Abhängigkeit erfasster Wetterbedingungen bzw. angesichts vorliegender Lichtbedingungen am Ort des Verbaus geschehen.

Vorzugsweise ist der Projektor dazu ausgebildet, den Prozessparameter auf die mittels des Straßenfertigers hergestellte Einbauschicht zu projizieren. Somit kann das Bedienpersonal im Bereich der Einbaubohle mittels Sichtkontrolle auf die neu hergestellte Einbauschicht erkennen, mittels welcher Einbauprozessparameter diese hergestellt wurde.

Eine Ausführungsform der Erfindung sieht vor, dass der Projektor dazu ausgebildet ist, den Prozessparameter auf eine am Straßenfertiger ausgebildete Projektionsfläche zu projizieren. Bei dieser Variante wird der Straßenfertiger selbst, d.h. dessen Fahrzeug- und/oder Bohlenkörper, als Projektionsfläche zum Abbilden des Prozessparameters genutzt. Das Abbilden des Prozessparameters unmittelbar an einer Oberfläche des Straßenfertigers kann insbesondere witterungsbedingt von Vorteil sein.

Eine praktische Variante sieht vor, dass die Einbaubohle die Projektionsfläche zum Abbilden des Prozessparameters ausbildet. Die Einbaubohle bildet eine ausreichend große Oberfläche aus, die vorteilhaft als Projektionsfläche genutzt werden kann. Darauf ist der projizierte Prozessparameter für den Bohlenbediener, aber auch für anderes Bedienpersonal des Straßenfertigers, beispielsweise den Fahrzeugfahrer, gut einsehbar, um die Herstellungsparameter der neuen Einbauschicht besser im Blick zu behalten.

Vorzugsweise weist die Einbaubohle einen Grundbohlenkörper und daran befestigte, seitwärts ausfahrbare Ausziehteile zum Variieren einer Einbaubreite auf, wobei die Projektionsfläche auf einer oberen Abdeckung des Grundbohlenkörpers vorgesehen ist. Die obere Abdeckung des Grundbohlenkörpers bildet eine hervorragende Projektionsfläche für den darauf projizierten Prozessparameter aus. Hier lässt sich der projizierte Prozessparameter auch dann im Auge behalten, wenn der Bohlenbediener auf die gegenüberliegende Seite seines Außenbedienstands wechselt.

Vorteilhaft ist es, wenn sowohl am Außenbedienstand eingestellte und/oder daran angezeigte Prozessparameter des Grundbohlenkörpers und/oder der daran befestigten Ausziehteile auf der Projektionsfläche, unabhängig davon an welcher Stelle die Projektionsfläche vorliegt, abbildbar sind. Somit kann der Bohlenbetrieb über die gesamte Einbaubreite mittels Projizierung besser überwacht werden.

Vorstellbar wäre es, dass der Projektor dazu konfiguriert ist, den Prozessparameter sowohl auf der vom Straßenfertiger gebildeten Projektionsfläche als auch auf der mittels der hergestellten Einbauschicht gebildeten Projektionsfläche sichtbar abzubilden. Hier bilden also der Straßenfertiger und die damit hergestellte Einbauschicht jeweils mindestens eine Projektionsfläche für den Projektor aus.

Die Erfindung sieht vor, dass der Projektor dazu konfiguriert ist, eine Lage der Projektionsfläche in Abhängigkeit einer erfassten Position des Bohlenbedieners automatisch anzupassen. Ein dafür vorgesehenes Positionserfassungssystem des Straßenfertigers könnte beispielsweise eine Bewegung des Bohlenbedieners nachverfolgen, worauf basierend der Projektor automatisch die Lage der Projektionsfläche mitbewegt, sodass der Bohlenbediener, unabhängig davon an welcher Stelle er sich im Bereich der Einbaubohle aufhält, die hinsichtlich seiner erfassten Position verlagerte, projizierte Information auf der Projektionsfläche überprüfen kann.

Eine Variante sieht vor, dass der Straßenfertiger eine Schichtdickenmessvorrichtung, beispielsweise in Form eines seitlich am Straßenfertiger befestigten Messbalkens, zum Ermitteln einer Schichtdicke der hergestellten Einbauschicht aufweist, wobei der Projektor an der Schichtdickenmessvorrichtung befestigt ist. Vorstellbar ist es, dass der Projektor dazu konfiguriert ist, eine mittels der Schichtdickenmessvorrichtung erfasste Schichtdicke der hergestellten Einbauschicht auf die Projektionsfläche zu projizieren. Damit ließe sich die erfasste Schichtdicke sowohl am Display des Außenbedienstands als auch an separater Stelle, d.h. unmittelbar am Straßenfertiger und/oder auf der neu hergestellten Einbauschicht, für das Baustellenpersonal abbilden.

Vorzugsweise weist der Straßenfertiger einen Dachaufbau mit einem Fahrerschutzdach auf, woran der Projektor befestigt ist. Aus dieser Höhe ließe sich die für den Prozessparameter vorgesehene Projektionsfläche hervorragend einstellen. Zweckmäßig wäre es, wenn der Projektor in einem am Fahrerschutzdach befestigten Wärmebildkameramodul integriert ist.

Eine bevorzugte Variante sieht vor, dass der Projektor an einem hinteren Tragholm des Dachaufbaus befestigt ist. Vorstellbar ist es, dass der Projektor an dem Tragholm des Dachaufbaus befestigt ist, der in Einbaurichtung unmittelbar hinter einem Fahrersitz positioniert ist. Eine Ausführungsform sieht vor, dass der Projektor innerhalb des Tragholm integriert ist, sodass der Tragholm für den darin aufgenommenen Projektor als schutzgebendes Gehäuse vorliegt. Weiter vorstellbar ist es, dass an einem linken und an einem rechten Tragholm des Dachaufbaus jeweils ein Projektor befestigt ist.

Eine Ausführungsform der Erfindung sieht vor, dass die am Außenbedienstand der Einbaubohle gelagerte Steuereinrichtung den Projektor aufweist. Hier liegt die Steuereinrichtung des Außenbedienstands selbst als Träger für den Projektor vor. Die Steuereinrichtung sowie der daran integral verbaute Projektor sind insbesondere werkzeuglos anbau- und abnehmbar am Außenbedienstand der Einbaubohle des Straßenfertigers montiert.

Vorzugsweise ist der Projektor anhand der Steuereinrichtung des Außenbedienstands, insbesondere mittels eines Sprachsteuermoduls der Steuereinrichtung, steuerbar. Damit kann der Bohlenbediener den Betrieb des Projektors problemlos steuern. Vorzugsweise ist ein Optikmodul des Projektors mittels des Bedienpanels der am Außenbedienstand der Einbaubohle gelagerten Steuereinrichtung einstellbar. Damit lässt sich beispielsweise die Bildschärfe des projizierten Prozessparameters variieren. Vorstellbar ist es, dass sich anhand der Steuereinrichtung des Außenbedienstands eine Vielzahl von Bildgebungseffekten des Projektors steuern lassen.

Eine bevorzugte Variante sieht vor, dass der Außenbedienstand, insbesondere die daran vorgesehene Steuereinrichtung zum Steuern der Einbaubohle, ein Anwesenheitserkennungssystem aufweist, um eine Entfernung des Bohlenbedieners zur Steuereinrichtung zu erfassen, wobei der Projektor den Prozessparameter auf die Projektionsfläche projiziert, wenn der Bohlenbediener nicht innerhalb der vorbestimmten Distanz erfasst wird. Somit kann der Betrieb des Projektors in Abhängigkeit einer gemessenen Entfernung zwischen der Steuereinrichtung und dem Bohlenbediener aktiviert und deaktiviert werden.

Eine Variante sieht vor, dass der Projektor beweglich am Straßenfertiger gelagert ist, sodass eine Lage der Projektionsfläche veränderbar ist. Damit lässt sich beispielsweise die genutzte Projektionsfläche am Straßenfertiger und/oder auf der hergestellten Einbauschicht in Abhängigkeit davon einstellen, auf welcher Bohlenseite der Bohlenbediener während der Einbaufahrt seitlich der Einbaubohle mitläuft.

Vorzugsweise umfasst der Straßenfertiger mindestens eine Erfassungseinheit, um Ist-Prozessparameter an der Einbaubohle zu erfassen, wobei der Projektor dazu konfiguriert ist, mittels der Erfassungseinheit während des Betriebs des Straßenfertigers erfasste Ist-Prozessdaten, vorzugsweise in Echtzeit, auf der Projektionsfläche abzubilden. Damit lässt sich hervorragend das tatsächlich hergestellte Einbauergebnis kontrollieren.

Beispielsweise ist eine mittels der Erfassungseinheit erfasste Einbaudicke, eine Einbaubreite und/oder eine Temperatur der hergestellten Einbauschicht auf der Projektionsfläche visuell abbildbar. Vorstellbar wäre es, dass mindestens eine Verdichteraggregatseinstellung, beispielsweise eine Tamperdrehzahl und/oder eine Tamperhubweglänge, auf der Projektionsfläche abbildbar ist.

Die Erfindung betrifft auch ein Verfahren an einem Straßenfertiger zum Projizieren mindestens eines an einem Außenbedienstand einer Einbaubohle eingestellten und/oder angezeigten Prozessparameters mittels eines am Straßenfertiger vorgesehenen Projektors auf eine Projektionsfläche. Vorzugsweise projiziert der Projektor den Prozessparameter auf einer direkt am Straßenfertiger ausgebildeten Projektionsfläche und/oder auf einer mittels des Straßenfertigers hergestellten Einbauschicht. Die am Außenbedienstand der Einbaubohle des Straßenfertigers eingestellten und/oder angezeigten Prozessparameter sind damit besser für das Baustellenpersonal kontrollierbar.

Im Folgenden werden vorteilhafte Ausführungsbeispiele der Erfindung anhand von Zeichnungen näher erläutert. Im Einzelnen zeigen:
- Fig. 1: Eine perspektivische Ansicht eines erfindungsgemäßen Straßenfertigers,
- Fig. 2: eine Steuereinrichtung eines Einbaubohlenaußenbedienstands,
- Fig. 3: Projektionsflächen am Straßenfertiger und auf der hergestellten Einbauschicht zum Abbilden des projizierten Prozessparameters,
- Fig. 4: eine Einbaubohle mit einem Grundbohlenkörper sowie seitwärts ausfahrbaren Ausziehteilen,
- Fig. 5: eine Einbaubohle mit einem Grundbohlenkörper, seitwärts ausfahrbaren Ausziehteilen sowie daran befestigten Anbauteilen, und
- Fig. 6: einen Straßenfertiger mit einer Schichtdickenmessvorrichtung und daran befestigten Projektor.

Gleiche Komponenten sind in den Figuren durchgängig mit gleichen Bezugszeichen versehen.

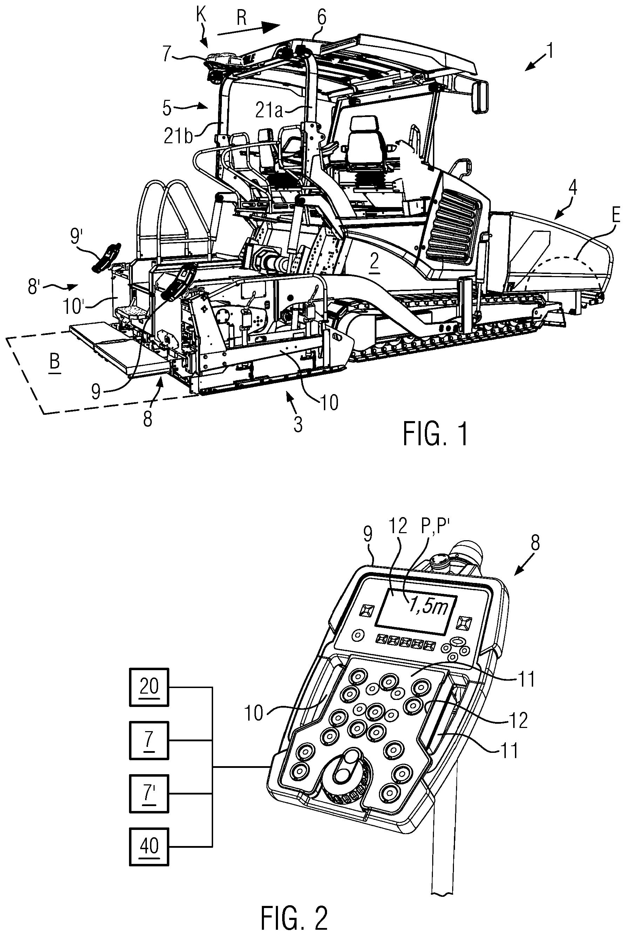

Figur 1 zeigt einen Straßenfertiger 1 zum Herstellen einer Einbauschicht B. Der Straßenfertiger 1 umfasst ein Chassis 2 sowie eine höhenverstellbar gelagerte und in Fahrtrichtung R geschleppte Einbaubohle 3 zum Verdichten eines Einbaumaterials E, welches der Einbaubohle 3 aus einem Gutbunker 4 des Straßenfertigers 1 zur Verfügung gestellt wird. Ferner verfügt der Straßenfertiger 1 über einen Dachaufbau 5 mit einem Fahrerschutzdach 6, das in Einbaurichtung R betrachtet hinten mittels eines linken und eines rechten Tragholms 21a, 21b gestützt ist.

Figur 1 zeigt einen Projektor 7, der am Fahrerschutzdach 6 befestigt ist. Hier ist der Projektor 7 integraler Bestandteil einer Wärmebildkamera K, die dazu ausgebildet ist, ein Wärmebild der neu verlegten Einbauschicht B zu erfassen. Die Einbaubohle 3 umfasst seitliche Außenbedienstände 8, 8' für Bohlenbedienpersonal. Die jeweiligen Außenbedienstände 8, 8' verfügen über eine Steuereinrichtung 9, 9', die zum Eingeben und zum Anzeigen von Prozessparametern der Einbaubohle 3 ausgebildet sind. Die jeweiligen Steuereinrichtungen 9, 9' sind an seitwärts ausfahrbaren Ausziehteilen 10, 10' der Einbaubohle 3 befestigt, sodass sie immer seitlich der hergestellten Einbauschicht B für das Bedienpersonal zugänglich sind.

Figur 2 zeigt die Steuereinrichtung 9 des Außenbedienstands 8 aus Figur 1 in vergrößerter Darstellung. Die Steuereinrichtung 9' des gegenüberliegenden Außenbedienstands 8' kann entsprechend ausgebildet sein.

In Figur 2 umfasst die Steuereinrichtung 9 ein Bedienpanel 11 zum Einstellen von Prozessparametern P sowie ein Display 12 zur Anzeige von Prozessparametern P. Anhand des Displays 12 kann der Bohlenbediener sowohl eingestellte Prozessparameter P als auch die während der Einbaufahrt des Straßenfertigers 1 erfassten Prozessparameter P' anzeigen, sodass der Bohlenbediener den Herstellungsprozess der neuen Einbauschicht B am Display 12 überwachen kann.

Figur 2 zeigt schematisch, dass die Steuereinrichtung 9 den Projektor 7 aus Figur 1 aufweisen kann oder einen zusätzlichen Projektor 7' umfasst. Die unmittelbar an der Steuereinrichtung 9 eingestellten und/oder angezeigten Prozessparameter P, P' können dann problemlos an den Projektor 7, 7' der Steuereinrichtung 9 weitergeleitet werden. Weiter zeigt Figur 2 in schematischer Darstellung ein Sprachsteuermodul 40 mittels welchem die Steuereinrichtung 9, insbesondere ein Betrieb des Projektors 7, 7', steuerbar ist.

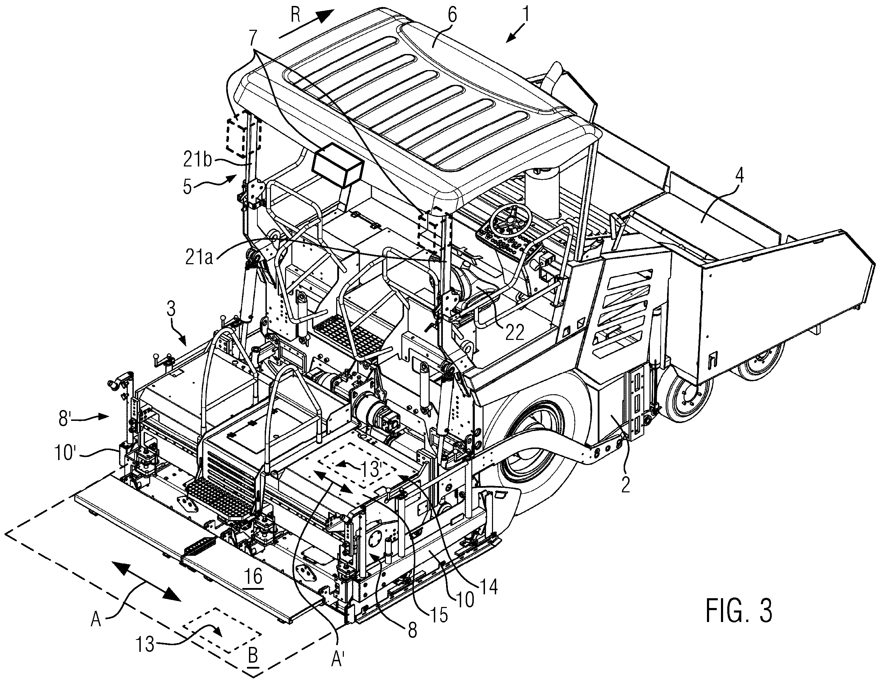

Der in Figur 1 und in Figur 2 gezeigte Projektor 7, 7' ist dazu ausgebildet, mindestens einen der am Bedienpanel 11 aus Figur 2 eingestellten und/oder am Display 12 aus Figur 2 angezeigten Prozessparameter P, P' auf mindestens eine Projektionsfläche 13, 13' zu projizieren (siehe Figur 3), sodass der projizierte Prozessparameter P, P' für den Bohlenbediener der Einbaubohle 3 sichtbar ist.

Die Projektionsfläche 13, 13' zum Abbilden des Prozessparameters P, P' ist in Figur 3 dargestellt. Insbesondere kann der Projektor 7 dazu ausgebildet sein, den Prozessparameter P, P' auf die mittels des Straßenfertigers 1 hergestellte Einbauschicht B zu projizieren, was schematisch durch die Projektionsfläche 13 angezeigt ist. Ferner zeigt Figur 3, dass der Projektor 7 alternativ oder ergänzend ferner dazu ausgebildet sein kann, den Prozessparameter P, P' auf eine unmittelbar am Straßenfertiger 1 ausgebildete Projektionsfläche 13' zu projizieren, sprich der Straßenfertiger 1 selbst zum Ausbilden der Projektionsfläche 13' konfiguriert ist.

Figur 3 zeigt, dass die Einbaubohle 3 die Projektionsfläche 13' zum Abbilden des Prozessparameters P, P' ausbildet. Insbesondere verfügt die Einbaubohle 3 aus Figur 3 einen Grundbohlenkörper 14, an welchem die seitwärts ausfahrbaren Ausziehteile 10, 10' zum Variieren der Einbaubreite befestigt sind. Gemäß Figur 3 ist die Projektionsfläche 13' auf einer oberen Abdeckung 15 des Grundbohlenkörpers 14 ausgebildet.

Figur 3 zeigt in gestrichelter Darstellung, dass der Projektor 7 alternativ zu der gezeigten Befestigung am Fahrerschutzdach 6 an einem der Tragholme 21a, 21b befestigbar ist, vornehmlich aber an dem Tragholm 21a, 21b, der unmittelbar hinter einem Fahrersitz 22 positioniert ist.

Die schematisch in Figur 3 gezeigten Pfeile A, A' weisen auf eine optionale Verstellbarkeit der jeweiligen Projektionsflächen 13, 13' hin, beispielsweise je nachdem an welcher Stelle der Bohlenbediener positioniert ist. So könnte in Figur 3 beispielsweise die Projektionsfläche 13, 13' zum gegenüberliegenden Außenbedienstand 8' verlagert werden, wenn der Bohlenbediener von der in Fahrtrichtung R betrachteten rechten Seite der Einbaubohle 3, sprich vom dort positionierten Außenbedienstand 8, auf die gegenüberliegende linke Seite zum Außenbedienstand 8' wechselt. Ein Seitenwechsel ist über ein Trittblech 16 möglich und könnte mittels einer Anwesenheitserfassungseinheit 20 (siehe Figur 2) der Steuereinrichtung 9, 9' detektiert werden.

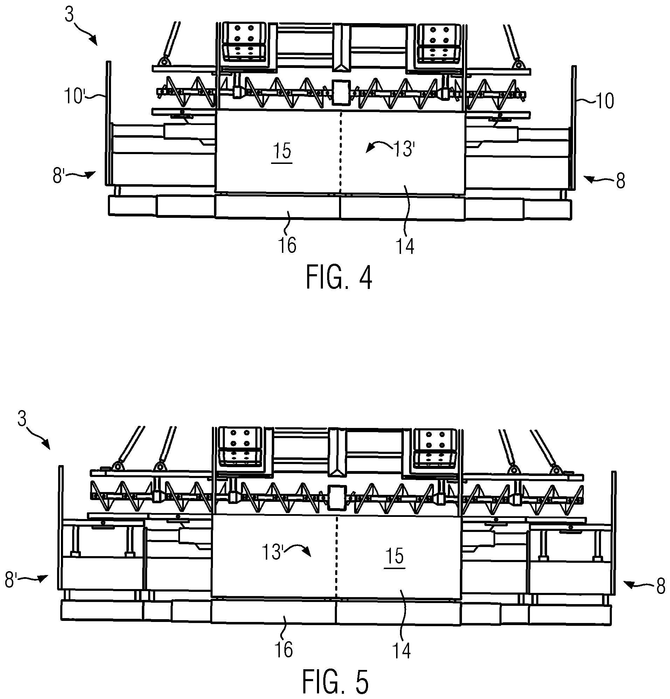

Figur 4 zeigt die Einbaubohle 3 mit seitwärts ausgefahrenen Ausziehteilen 10, 10'. Dadurch wird erkennbar, dass die jeweiligen Außenbedienstände 8, 8' vom Grundbohlenkörper 14 weiter seitwärts beabstandet sind, um eine größere Einbaubreite herzustellen. Die Projektionsfläche 13' liegt in Figur 4 weiterhin auf der oberen Abdeckung 15 des Grundbohlenkörpers 14 vor. Auf die Projektionsfläche 13' projizierte Prozessparameter P, P' könnten dann auch von einem Bediener, der hinter dem Grundbohlenkörper 14 mittig auf dem Trittblech 16 steht, kontrolliert werden. Ebenfalls bleiben die auf die Projektionsfläche 13' projizierten Prozessparameter P, P' hervorragend für den Fahrzeuglenker einsehbar.

Figur 5 zeigt die Einbaubohle 3 mit seitwärts ausgefahrenen Ausziehteilen 10, 10' sowie daran befestigten Anbauteilen 17, 17'. Die jeweiligen Außenbedienstände 8, 8' sind dann noch weiter seitwärts zum Grundbohlenkörper 14 ausgefahren positioniert. Die auf der Projektionsfläche 13' abgebildeten Prozessparameter P, P' bleiben jedoch weiterhin insbesondere für den Fahrzeuglenker des Straßenfertigers 1 hervorragend auf dem Grundbohlenkörper 14 visualisiert.

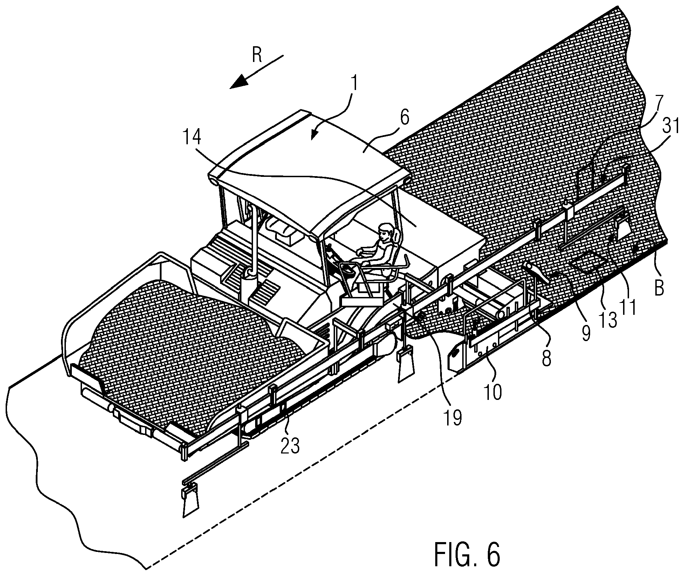

Figur 6 zeigt den Straßenfertiger 1 mit einer seitlich befestigten Schichtdickenmessvorrichtung 30 zum Ermitteln einer Schichtdicke der hergestellten Einbauschicht B. Die Schichtdickenmessvorrichtung 30 ist an einem Zugholm 19 für die Einbaubohle 3 befestigt. Die Schichtdickenmessvorrichtung 30 verfügt über einen Balkenabschnitt 31, der hinter der Einbaubohle 3, oberhalb der neu hergestellten Einbauschicht B positioniert ist. Der Projektor 7 ist am Balkenabschnitt 31 befestigt, um am Außenbedienstand 8 eingestellte und/oder angezeigte Prozessparameter P', beispielsweise die mittels der Schichtdickenmessvorrichtung 30 erfasste Schichtdicke, auf die Projektionsfläche 13 zu projizieren.

Die vorliegende Erfindung eignet sich hervorragend dazu, die an den Außenbedienständen 8, 8' eingestellten und/oder angezeigten Prozessparameter P, P', ggf. eine Auswahl davon, für das Bedienpersonal der Baustelle zusätzlich zur Displayanzeige an der Steuereinrichtung 9, 9' auch noch davon isoliert mittels Projektion auf die Projektionsfläche 13, 13' zu visualisieren. Dies ermöglicht eine verbesserte Qualitätskontrolle der hergestellten Einbauschicht B.

## Patentansprüche

1. Straßenfertiger (1) zum Herstellen einer Einbauschicht (B), umfassend ein Chassis (2), eine höhenverstellbar befestigte Einbaubohle (3) zum Verdichten eines Einbaumaterials (E), wobei die Einbaubohle (3) mindestens einen Außenbedienstand (8, 8') mit einer Steuereinrichtung (9, 9') aufweist, die mindestens ein Bedienpanel (11) zum Einstellen von Prozessparametern (P) der Einbaubohle (3) und/oder mindestens ein Display (12) zur Anzeige von an der Einbaubohle (3) eingestellten Prozessparametern (P, P') umfasst, und mindestens einen Projektor (7, 7'), der dazu ausgebildet ist, mindestens einen der am Bedienpanel (11) eingestellten und/oder am Display (12) angezeigten Prozessparameter (P, P') auf mindestens eine Projektionsfläche (13, 13') zu projizieren, sodass der darauf projizierte Prozessparameter (P, P') insbesondere für einen Bohlenbediener der Einbaubohle (3) sichtbar ist, **dadurch gekennzeichnet, dass** der Projektor (7, 7') dazu ausgebildet ist, eine Lage der Projektionsfläche (13, 13') automatisch in Abhängigkeit einer erfassten Position des Bohlenbedieners relativ zum Außenbedienstand (8, 8') zu verlagern.

2. Straßenfertiger nach Anspruch 1, **dadurch gekennzeichnet, dass** der Projektor (7, 7') dazu ausgebildet ist, den Prozessparameter (P, P') auf eine mittels der hergestellten Einbauschicht (B) gebildete Projektionsfläche (13) zu projizieren.

3. Straßenfertiger nach Anspruch 1 oder 2, **dadurch gekennzeichnet, dass** der Projektor (7) dazu ausgebildet ist, den Prozessparameter (P, P') auf eine am Straßenfertiger (1) ausgebildete Projektionsfläche (13') zu projizieren.

4. Straßenfertiger nach einem der vorangehenden Ansprüche, **dadurch gekennzeichnet, dass** die Einbaubohle (3) die Projektionsfläche (13') zum Abbilden des Prozessparameters (P, P') ausbildet.

5. Straßenfertiger nach Anspruch 4, **dadurch gekennzeichnet, dass** die Einbaubohle (3) einen Grundbohlenkörper (14) und daran befestigte, seitwärts ausfahrbare Ausziehteile (10, 10') zum Variieren einer Einbaubreite aufweist, wobei die Projektionsfläche (13') auf einer oberen Abdeckung (15) des Grundbohlenkörpers (14) vorgesehen ist.

6. Straßenfertiger nach einem der vorangehenden Ansprüche, **dadurch gekennzeichnet, dass** der Straßenfertiger (1) eine Schichtdickenmessvorrichtung (30) zum Ermitteln einer Schichtdicke der hergestellten Einbauschicht (B) umfasst, wobei der Projektor (7) an der Schichtdickenmessvorrichtung (30) befestigt ist.

7. Straßenfertiger nach einem der vorangehenden Ansprüche, **dadurch gekennzeichnet, dass** der Straßenfertiger (1) einen Dachaufbau (5) aufweist, wobei der Projektor (7) vorzugsweise an einem Tragholm (21a, 21b) des Dachaufbaus (5) befestigt ist oder an einem Fahrerschutzdach (6) als integraler Bestandteil einer daran gelagerten Wärmebildkamera (K) vorgesehen ist.

8. Straßenfertiger nach einem der vorangehenden Ansprüche, **dadurch gekennzeichnet, dass** die am Außenbedienstand (8, 8') der Einbaubohle (3) gelagerte Steuereinrichtung (9, 9') den Projektor (7, 7') aufweist.

9. Straßenfertiger nach einem der vorangehenden Ansprüche, **dadurch gekennzeichnet, dass** der Projektor (7, 7') anhand der Steuereinrichtung (9, 9') des Außenbedienstands (8, 8') steuerbar ist.

10. Straßenfertiger nach einem der vorangehenden Ansprüche, **dadurch gekennzeichnet, dass** die Steuereinrichtung (9, 9') ein Sprachsteuermodul (40) aufweist, mittels welchem ein Betrieb des Projektors (7, 7') steuerbar ist.

11. Straßenfertiger nach einem der vorangehenden Ansprüche, **dadurch gekennzeichnet, dass** die Einbaubohle (3) mindestens eine Erfassungseinheit umfasst, wobei der Projektor (7) dazu konfiguriert ist, mittels der Erfassungseinheit während des Betriebs der Einbaubohle (3) erfasste Prozessparameter (P') der Einbaubohle (3), insbesondere eine erfasste Einbaudicke, Einbaubreite und/oder Temperatur auf der Projektionsfläche (13, 13') sichtbar abzubilden.

12. Straßenfertiger nach einem der vorangehenden Ansprüche, **dadurch gekennzeichnet, dass** der projizierte Prozessparameter (P, P') mindestens eine eingestellte und/oder erfasste Verdichtungsaggregatseinstellung der Einbaubohle (3) ist.

13. Verfahren an einem Straßenfertiger (1), wobei mindestens ein an einem Außenbedienstand (8, 8') einer Einbaubohle (3) eingestellter und/oder anzeigbarer Prozessparameter (P, P') mittels eines am Straßenfertiger (1) vorgesehenen Projektors (7, 7') auf eine Projektionsfläche (13, 13') projiziert wird, **dadurch gekennzeichnet, dass** der Projektor (7, 7') eine Lage der Projektionsfläche (13, 13') automatisch in Abhängigkeit einer erfassten Position des Bohlenbedieners relativ zum Außenbedienstand (8, 8') verlagert.

14. Verfahren nach Anspruch 13, **dadurch gekennzeichnet, dass** der Projektor (7, 7') den Prozessparameter (P, P') auf eine am Straßenfertiger (1) ausgebildete Projektionsfläche (13') projiziert und/oder auf einer Projektionsfläche (13), die mittels der hergestellten Einbauschicht (B) gebildet wird.

## Claims

1. Road paver (1) for producing a paving layer (B), comprising a chassis (2) and a paving screed (3) mounted in a height-adjustable manner for compacting a paving material (E), said paving screed (3) having at least one external operating station (8, 8') with a control device (9, 9') which has at least one operating panel (11) for setting process parameters (P) of the paving screed (3) and/or at least one display (12) for displaying process parameters (P, P') set on the paving screed (3), and at least one projector (7, 7') which is formed to project at least one of the process parameters (P, P') set on the operating panel (11) and/or shown on the display (12) onto at least one projection area (13, 13') so that the process parameter (P, P') projected thereon is visible in particular to a screed operator of the paving screed (3), **characterized in that** the projector (7, 7') is adapted to automatically displace a position of the projection area (13, 13') in dependence on a detected position of the screed operator relative to the external control station (8, 8').

2. Road paver according to claim 1, **characterized in that** the projector (7, 7') is adapted to project the process parameter (P, P') onto a projection area (13) formed by means of the produced paving layer (B).

3. Road paver according to claim 1 or 2, **characterized in that** the projector (7) is adapted to project the process parameter (P, P') onto a projection area (13') formed on the road paver (1).

4. Road paver according to one of the preceding claims, **characterized in that** the paving screed (3) forms the projection area (13') for imaging the process parameter (P, P').

5. Road paver according to claim 4, **characterized in that** the paving screed (3) comprises a base screed body (14) and laterally extendable extending units (10, 10') attached thereto for varying a pave width, wherein the projection area (13') is provided on an upper cover (15) of the base screed body (14).

6. Road paver according to one of the preceding claims, **characterized in that** the road paver (1) comprises a layer thickness measuring device (30) for determining a layer thickness of the produced paving layer (B), the projector (7) being attached to the layer thickness measuring device (30).

7. Road paver according to one of the preceding claims, **characterized in that** the road paver (1) comprises a roof structure (5), the projector (7) preferably being fixed to a load carrying spar (21a, 21b) of the roof structure (5) or being provided on an operator protective roof (6) as an integral part of a thermal imaging camera (K) mounted thereon.

8. Road paver according to one of the preceding claims, **characterized in that** the control device (9, 9') mounted on the external control station (8, 8') of the paving screed (3) comprises the projector (7, 7').

9. Road paver according to one of the preceding claims, **characterized in that** the projector (7, 7') is controllable by means of the control device (9, 9') of the external control station (8, 8').

10. Road paver according to one of the preceding claims, **characterized in that** the control device (9, 9') comprises a voice control module (40) by means of which operation of the projector (7, 7') can be controlled.

11. Road paver according to one of the preceding claims, **characterized in that** the paving screed (3) comprises at least one detection unit, the projector (7) being configured to visibly image process parameters (P') of the paving screed (3) detected by means of the detection unit during operation of the paving screed (3), in particular a detected paving thickness, pave width and/or temperature, on the projection area (13, 13').

12. Road paver according to one of the preceding claims, **characterized in that** the projected process parameter (P, P') is at least one set and/or detected compaction unit setting of the paving screed (3).

13. Method on a road paver (1), wherein at least one process parameter (P, P'), which is set and/or displayable at an external control station (8, 8') of a paving screed (3) is projected onto a projection area (13, 13') by means of a projector (7, 7') provided on the road paver (1), **characterized in that** the projector (7, 7') automatically displaces a position of the projection area (13, 13') in dependence on a detected position of the screed operator relative to the external control station (8, 8').

14. Method according to claim 13, **characterized in that** the projector (7, 7') projects the process parameter (P, P') onto a projection area (13') formed on the road paver (1) and/or onto a projection area (13) formed by means of the produced paving layer (B).

## Revendications

1. Finisseur routier (1) permettant de produire une couche d'ouvrage (B), comprenant un châssis (2), une table de réglage (3) fixée de manière réglable en hauteur et permettant le compactage d'un matériau d'ouvrage (E), dans lequel la table de réglage (3) présente au moins un poste de commande externe (8, 8') avec un dispositif de commande (9, 9') comprenant au moins un panneau de commande (11) permettant l'ajustement de paramètres de procédé (P) de la table de réglage (3) et/ou au moins un affichage (12) permettant l'affichage, au niveau de la table de réglage (3), de paramètres de procédé (P, P') ajustés, et au moins un projecteur (7, 7') conçu pour projeter sur au moins une surface de projection (13, 13') au moins un des paramètres de procédé (P, P') ajustés au niveau du panneau de commande (11) et/ou affichés au niveau de l'affichage (12), de sorte que le paramètre de procédé (P, P') projeté sur ladite surface de projection est visible en particulier pour un opérateur de table de la table de réglage (3), **caractérisé en ce que** le projecteur (7, 7') est conçu pour déplacer une position de la surface de projection (13, 13') de manière automatique en fonction d'une position détectée de l'opérateur de table par rapport au poste de commande externe (8, 8').

2. Finisseur routier selon la revendication 1, **caractérisé en ce que** le projecteur (7, 7') est conçu pour projeter le paramètre de procédé (P, P') sur une surface de projection (13) formée au moyen de la couche d'ouvrage (B) produite.

3. Finisseur routier selon la revendication 1 ou 2, **caractérisé en ce que** le projecteur (7) est conçu pour projeter le paramètre de procédé (P, P') sur une surface de projection (13') formée au niveau du finisseur routier (1).

4. Finisseur routier selon l'une quelconque des revendications précédentes, **caractérisé en ce que** la table de réglage (3) forme la surface de projection (13') permettant de présenter le paramètre de procédé (P, P').

5. Finisseur routier selon la revendication 4, **caractérisé en ce que** la table de réglage (3) présente un corps de table de base (14) et des parties extensibles (10, 10') fixées audit corps de table de base, pouvant être déployées latéralement et permettant de modifier une largeur d'ouvrage, dans lequel la surface de projection (13') est fournie sur un capot supérieur (15) du corps de table de base (14).

6. Finisseur routier selon l'une quelconque des revendications précédentes, **caractérisé en ce que** le finisseur routier (1) présente un dispositif de mesure d'épaisseur de couche (30) permettant de déterminer une épaisseur de couche de la couche d'ouvrage (B) produite, dans lequel le projecteur (7) est fixé au dispositif de mesure d'épaisseur de couche (30).

7. Finisseur routier selon l'une quelconque des revendications précédentes, **caractérisé en ce que** le finisseur routier (1) présente une structure de toit (5), dans lequel le projecteur (7) est de manière préférée fixé à une poutre porteuse (21a, 21b) de la structure de toit (5) ou est fourni au niveau d'un protège-conducteur (6) en tant que partie intégrante d'une caméra thermique (K) montée sur ledit protège-conducteur.

8. Finisseur routier selon l'une quelconque des revendications précédentes, **caractérisé en ce que** le dispositif de commande (9, 9') monté sur le poste de commande externe (8, 8') de la table de réglage (3) présente le projecteur (7, 7').

9. Finisseur routier selon l'une quelconque des revendications précédentes, **caractérisé en ce que** le projecteur (7, 7') peut être commandé à l'aide du dispositif de commande (9, 9') du poste de commande externe (8, 8').

10. Finisseur routier selon l'une quelconque des revendications précédentes, **caractérisé en ce que** le dispositif de commande (9, 9') présente un module de commande vocale (40) au moyen duquel le fonctionnement du projecteur (7, 7') peut être commandé.

11. Finisseur routier selon l'une quelconque des revendications précédentes, **caractérisé en ce que** la table de réglage (3) comprend au moins une unité de détection, dans lequel le projecteur (7) est configuré pour présenter de manière visible, sur la surface de projection (13, 13'), des paramètres de procédé (P') de la table de réglage (3) détectés au moyen de l'unité de détection pendant le fonctionnement de la table de réglage (3), en particulier une épaisseur d'ouvrage, une largeur d'ouvrage et/ou une température détectée(s).

12. Finisseur routier selon l'une quelconque des revendications précédentes, **caractérisé en ce que** le paramètre de procédé (P, P') projeté est au moins un ajustement de groupe de compactage ajusté et/ou détecté de la table de réglage (3).

13. Procédé concernant un finisseur routier (1), dans lequel au moins un paramètre de procédé (P, P') ajusté et/ou pouvant être affiché au niveau d'un poste de commande externe (8, 8') d'une table de réglage (3) est projeté sur une surface de projection (13, 13') au moyen d'un projecteur (7, 7') fourni au niveau du finisseur routier (1), **caractérisé en ce que** le projecteur (7, 7') déplace une position de la surface de projection (13, 13') de manière automatique en fonction d'une position détectée de l'opérateur de table par rapport au poste de commande externe (8, 8').

14. Procédé selon la revendication 13, **caractérisé en ce que** le projecteur (7, 7') projette le paramètre de procédé (P, P') sur une surface de projection (13') formée au niveau du finisseur routier (1) et/ou sur une surface de projection (13) formée au moyen de la couche d'ouvrage (B) produite.
